# EUROPÄISCHE PATENTSCHRIFT

(11) **EP 1 337 846 B1**
(45) Veröffentlichungstag und Bekanntmachung des Hinweises auf die Patenterteilung: **10.01.2007**
(21) Anmeldenummer: 01995684.6
(22) Anmeldetag: 30.11.2001
(51) Int. Cl.: G01N 33/543, G01N 35/00

(54) **ANORDNUNG ZUR HERSTELLUNG, TESTUNG UND ARCHIVIERUNG VON FESTPHASENGEBUNDENEN CHEMISCHEN ODER BIOLOGISCHEN BIBLIOTHEKEN**
ARRANGEMENT FOR THE PRODUCTION TESTING AND ARCHIVING OF CHEMICAL OR BIOLOGICAL ARRAYS BONDED TO A SOLID PHASE
SYSTEME POUR PRODUIRE, TESTER ET ARCHIVER DES MATRICES CHIMIQUES OU BIOLOGIQUES LIEES A UNE PHASE SOLIDE

(30) Priorität: 30.11.2000 DE 10060502
(43) Veröffentlichungstag der Anmeldung: 27.08.2003
(73) Patentinhaber: INSTITUT FÜR PHYSIKALISCHE HOCHTECHNOLOGIE E.V., 07745 Jena (DE)
(72) Erfinder: ALBRECHT, Arne, 98693 Ilmenau (DE); HENKEL, Thomas, 07745 Jena (DE); KALLENBACH, Matthias, 98714 Stützerbach (DE); MAYER, Günter, 07745 Jena (DE); SCHOBER, Andreas, 86745 Schwangau (DE)
(74) Vertreter: Bock, Gerhard
(86) Internationale Anmeldenummer: PCT/EP2001/013999
(87) Internationale Veröffentlichungsnummer: WO 2002/044724

(56) Entgegenhaltungen:
- EP-A- 0 317 286
- WO-A-92/05443
- DE-A- 19 901 544

## Beschreibung

Die Erfindung betrifft eine Anordnung zur Herstellung, Testung und Archivierung von festphasengebundenen chemischen oder biologischen Bibliotheken, wobei die Festphasenträger mit mindestens einer definierten Verbindung ausgestattet sind.
Die vorgeschlagene Anordnung ermöglicht, daß die einem Trägerkörper zugeordneten einzelnen Festphasenträger mit dem Träger transportiert, archiviert, analysiert und mit gelösten sowie gasförmigen chemischen Reagenzien zur Reaktion gebracht werden können.
Bevorzugt findet die Anordnung Verwendung bei der Herstellung, Verwaltung, und Manipulation von festphasengekoppelten Substanzbibliotheken mit dem Ziel, die auf Festphasenträgern fixierten Einzelverbindungen (atomare Elemente der Bibliothek) bezüglich molekularer Wechselwirkung mit komplexen biologischen, biochemischen, physiologischen und anderen Systemen zu charakterisieren und Verbindungen mit bestimmten Zieleigenschaften zu selektieren und zu identifizieren. Die Anordnung kann darüber hinaus auf alle Prozesse, bei denen molekulare oder biologische bzw. biochemische Eigenschaften und Informationen auf eine Vielzahl von Elementen definiert verteilt vorliegen müssen, verwendet werden, wobei die Manipulation einzelner Elemente bzw. Elementarrays ermöglicht ist.

Substanzbibliotheken werden nach dem bisherigen Stand der Technik
1. entweder durch das klassiche "Split and Mix"-Verfahren hergestellt, wobei einerseits gewährleistet ist, daß jeder Funktionsträger Träger einer definierten, einheitlichen Verbindung ist und die Anzahl und Struktur aller in der Bibliothek vorhandenen Verbindungen bekannt ist, andererseits eine Zuordnung der chemischen Information zu einem Partikel nicht möglich ist. Eine Zuordnung ist nur durch eine nachfolgende Analyse möglich. Die Verwendung codierter Funktionsträger in Verbindung mit einem "Sample Tracking System" erlaubt die Identifizierung von Syntheseträgern sowie eine Protokollierung der mit diesem durchgeführten Operationen und Manipulationen, wodurch eine Zuordnung von chemischer Information zum Syntheseträger ermöglicht wird. Aufgrund der Kombination von Syntheseträger mit einem Kodierungssystem sind solche Anordnungen einer Miniaturisierung im Sinne einer Verwendung einzelner Syntheseharzpartikel mit Durchmessern von 20 - 200 µm im allgemeinen und 10 -2000 µm im besonderen Anwendungsfall nicht zugänglich.
2. oder durch eine klassische Synthese der Elemente der Bibliothek in definierten Einzelkompartimenten hergestellt, welche individuell prozessiert werden, ist eine eindeutige Zuordnung von Kompartiment und chemischer Struktur möglich. Der mit diesem Verfahren erzielbare Parallelisierungsgrad ist vergleichsweise gering, so daß die Synthese einer vollständigen typischen kombinatorischen Bibliothek mit ca. 10⁶ bis 10⁹ Elementen mit dem gegenwärtigen Stand der Technik nicht realisierbar ist.

Die verschiedenen Ausführungen nach dem Stand der Technik bekannter Titerplatten ermöglichen keine sichere Fixierung von Substanz- und/oder Reaktionsträgern. Bekannte Reaktions- und Synthesesysteme mit einer örtlichen Fixierung (z.B. mit lokalisierten Trägersubstanzen) weisen eine Reihe von Nachteilen hinsichtlich des Handlings der Substanz- und/oder Reaktionsträger auf.

Der Erfindung liegt die Aufgabe zugrunde, eine Anordnung zur Herstellung, Testung und Archivierung von festphasengebundenen chemischen oder biologischen Bibliotheken anzugeben, welche eine lokal definierte temporäre Anbindung individueller Festphasenträger auf einem gemeinsamen Träger gewährleistet und gleichzeitig eine protokollgemäße Umsetzung der einzelnen Festphasenträger ermöglicht, wodurch beliebig vollständige kombinatorischen Bibliotheken bzw. deren Untermengen erzeugt werden können.

Im Rahmen der Erfindung ist als Träger ein Substrat mit einer dem Verwendungszweck angepaßten Oberflächengeometrie und Struktur eingesetzt, wobei der Träger mit einer Magnetvorrichtung versehen ist, welche ein definiert strukturiertes Magnetfeld auf mindestens einer der Oberflächen des Trägers ausbildet. Als prozessierbare Festphasenträger dienen in der Geometrie dem Verwendungszweck angepaßte Elemente mit induzierbaren oder permanenten magnetischen Eigenschaften mit einer typischen maximalen Ausdehnung (Länge, Breite) von 50 µm - 5000 µm, im Spezialfall von 20 µm - 10000 µm, ebenfalls beinhaltend ein Material mit induzierbaren oder permanenten Magneteigenschaften, wobei die Festphasenträger weiterhin mit mindestens einem Material zur chemischen Immobilisierung chemischer Verbindungen oder geeigneten Kompartimenten für die physikalische Immobilsierung von Substanzen versehen sind. Manipulatoren im Sinne der Erfindung sind Vorrichtungen und Geräte, welche für das Bestücken eines Trägers mit den einzelnen Festphasenträgern, das Absetzen und Aufnehmen der einzelnen oder mehrerer Festphasenträger geeignet sind. Die spezielle Ausgestaltung dieser Manipulatoren kann beliebig sein und liegt außerhalb vorliegender Erfindung.

Bevorzugt enthält der die Festphasenträger aufnehmende Träger Permanentmagnete, die derart angeordnet und/oder strukturiert sind, daß die Überlagerung aller magnetischen Teilfelder ein Magnetfeld mit einer Vielzahl von punkt- oder linienförmigen Bereichen höchster Feldstärke ergibt, die über die Gesamtfläche der Matrix der zu fixierenden Festphasenträger verteilt sind.

Die Erfindung soll nachstehend anhand eines schematischen Ausführungsbeispiels näher erläutert werden. Es zeigen:
- Fig. 1: beispielhaft einen Träger, der mit mehreren einzelnen Festphasenträgern bestückt ist in perspektivischer Ansicht und
- Fig. 2: einen Schnitt durch eine mögliche Ausbildung des Trägers und der darauf befindlichen Festphasenträger.

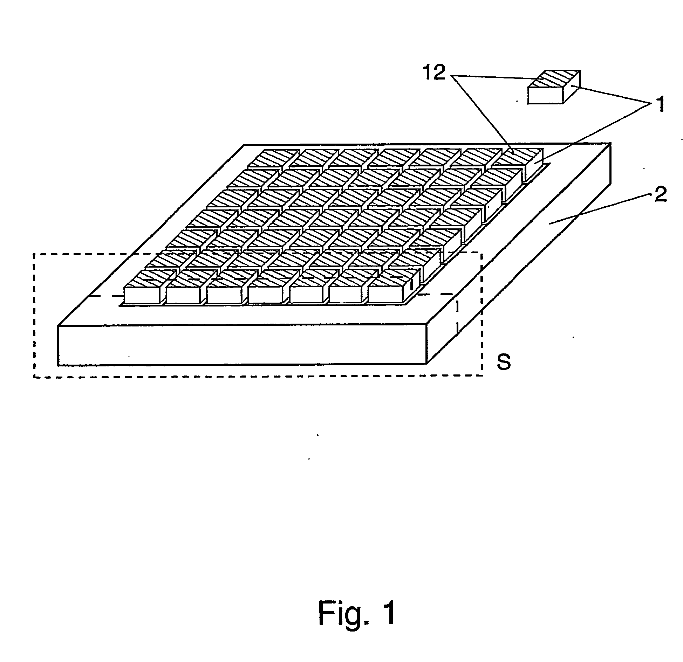

Für die vorgeschlagene Anordnung werden zwei funktionelle Grundelemente benötigt. Dies sind zum einen Festphasenträger 1 (Substanzträger), welcher im Beispiel durch kleine Plättchen mit Abmessungen von einigen Mikrometern bis einigen Millimetern gebildet sind, die zumindest auf einem Teil ihrer Oberfläche so modifiziert oder beschichtet sind, daß chemische oder biologische Substanzen dauerhaft oder temporär angelagert werden können. Zum anderen einem Träger 2, der durch eine großflächige Trägerplatte gebildet ist, die eine vorzugsweise planare Fläche aufweisen, auf der die Festphasenträger 1 geometrisch definiert geordnet und reversibel fixiert werden können, wie in Figur 1 schematisch dargestellt.

Die Fixierung erfolgt durch eine magnetische Kraftwirkung. Dies hat gegenüber einer Fixierung mit mechanischem Kraft- oder Formschluß den Vorteil, daß keine funktionsnotwendigen Hohlräume oder Hinterschneidungen auftreten, die bei chemischen Prozessabläufen in Lösungen zur Substanzverschleppung führen würden.

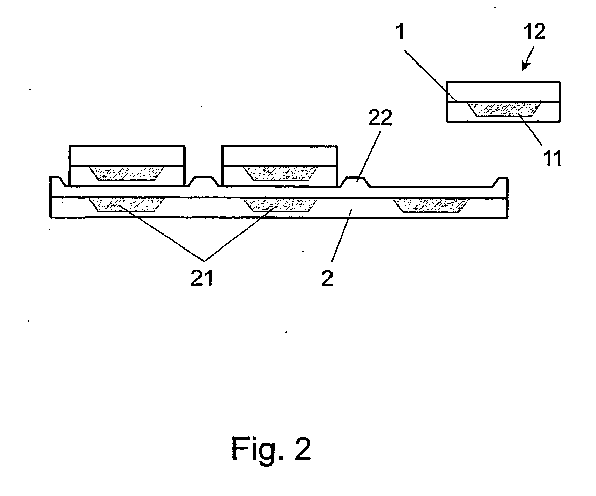

Figur 2 zeigt einen Schnitt entlang einer Ebene S nach Fig. 1, wobei ein Festphasenträger 1 im abgehobener Lage dargestellt ist. Die Festphasenträger 1 und der Träger 2 enthalten magnetische Elemente, die durch ihre Wechselwirkung die fixierende Kraft hervorrufen. Zumindest die magnetischen Elemente 21 des Trägers 2 sind dabei permanent magnetisiert. Die magnetischen Elemente der Festphasenträger 1 sind entweder ebenfalls permanent magnetisiert oder sind ferromagnetisch und werden temporär im Feld des Trägers 2 magnetisiert. Werden die Festphasenträger 1 mit ferromagnetischen Elementen 11 ausgeführt, so werden diese derart gestaltet, daß der Massenschwerpunkt - der ferromagnetischen Elemente in der Nähe der Auflagefläche zum Träger 2 liegt, um eine Vorzugsorientierung auf der Trägerplatte zu schaffen. Der genutzte Effekt ist die anziehende magnetische Kraftwirkung zwischen Körpern mit gleicher Magnetisierungsrichtung. Die magnetischen Elemente im Träger 2 sind senkrecht zur Fixierungsebene unipolar magnetisiert. Die magnetischen Elemente 11 der Festphasenträger 1 sind oder werden senkrecht zur Auflageebene magnetisiert. Die magnetischen Elemente 21 des Trägers sind derart angeordnet, das sich lokale Maxima der Feldstärke und der Feldstärkegradienten (das Produkt beider Größen ist ausschlaggebend für die Größe der Kraftwirkung) an den geometrischen Orten ergeben, an denen die Festphasenträger 1 fixiert werden sollen. Die Gestalt und Größe der magnetischen Elemente 11 in den Festphasenträgern 1 und im Träger 2 werden so gewählt, daß trotz Wechselwirkungen zwischen benachbarten Elementen, die Festphasenträger 1 sicher fixiert werden. Vorzugsweise werden die magnetischen Elemente durch einzelne Magnetkörper gebildet, die in Vertiefungen der Trägerplatte eingelagert sind. Die magnetischen Elemente können auch durch eine magnetische Materialschicht mit einer lokalen Häufung von Magnetmaterial gebildet werden oder durch eine weitgehend homogene Magnetmaterialschicht, die lokal eine verstärkte oder alternierende Magnetisierung aufweist. Andere Ausbildungen der magnetischen Elemente im Träger liegen im Rahmen der Erfindung. Wesentlich ist, daß im Träger eine Vielzahl von Bereichen erhöhter magnetischer Feldstärke existieren, die eine Fixierung der Festphasenträger 1 ermöglichen. Je nach Verwendungszweck der vorgeschlagenen Anordnung können dabei auch auf Zeilen des Trägers 2 benachbart liegende magnetische Elemente 21 zu einer Linie zusammengefaßt sein. Die magnetischen Elemente 21 des Trägers 2 werden zum Schutz vor Korrosion mit einer Schutzschicht abgedeckt oder vollständig vom Grundmaterial des Trägers 2 bzw. vom dem Träger zugewandten Seite der Festphasenträger 1 eingeschlossen bzw. abgedeckt. Zur Unterstützung der Manipulation können zusätzlich mechanische Hilfselemente 22 vorgesehen werden. Diese sind vorzugsweise flache konische oder pyramidenförmige Elemente auf der Auflagefläche des Trägers 2, die eine Groborientierung der Festphasenträger 1 bewirken.
Als Material für den Träger 2 und die Festphasenträger 1 ist vorzugsweise Silizium, Glas oder ein chemisch stabiler Kunststoff eingesetzt.
Figur 2 zeigt eine bevorzugte Ausführungsform aus Silizium. Die Festphasenträger 1 als auch der Träger 2 bestehen im Beispiel aus jeweils zwei Siliziumplättchen. In jeweils eins genannter Plättchen sind Vertiefungen durch naßchemisches Ätzen eingebracht. Diese Vertiefungen werden mit magnetischen oder magnetisierbaren Material verfüllt, was bevorzugt durch ein Siebdruckverfahren geschieht. Die jeweils oberen Siliziumplättchen decken die jeweils unteren ab. Die obere Ebene der Festphasenträger 1 ist mit einer funktionalen Schicht 12 zur Anlagerung chemischer oder biologischer Substanzen versehen. Der Träger 2 selbst ist im Beispiel mit zusätzlichen Strukturen 21 zur Manipulationshilfe versehen, die im Beispiel ebenfalls durch naßchemisches Ätzen in die obere Ebene des den Träger 2 abdeckenden Silizium plättchen erzeugt werden können.

Genannte Elemente 1, 2 können auch aus einer Substratebene aufgebaut werden, die durch eine Schutzschicht abgedeckt wird. Für die Schutzschicht werden vorzugsweise chemikalienbeständige Kunststoffe z.B. aus der Gruppe der Fluorkunststoffe oder der Polyimide oder organisch-anorganische Kompositwerkstoffe eingesetzt.

Als Grundmaterial können auch Gläser/Keramiken genutzt werden, die durch Gieß- oder Prägeverfahren oder durch Abtragsverfahren, z.B. Atzen, Laserschneiden oder Sandstrahlen strukturiert werden. Eine sehr vorteilhafte Ausfürungsform ergibt sich durch den Einsatz von chemikalienbeständigen Kunststoffen als Grundmaterial, wenn die magnetischen Elemente vermittels eine Spritzgußverfahrens in den Träger eingebettet werden.

Nachstehend soll die Verwendung der beschrieben Anordnung zur Erzeugung einer kombinatorischen Bibliothek beispielhaft näher beschrieben werden.

Als Beispiel soll die Synthese einer vollständigen kombinatorischen Peptidbibliothek unter Verwendung der Bausteine Alanin, Asparagin und Glycin unter Verwendung der Fmoc geschützten Pentafluorophenylester der Aminosäuren dienen.
Dazu sind zunächst drei Träger 2 gemäß Figur 1 vorgesehen, auf denen jeweils neun Festphasenträger 1 fixiert sind. Weiterhin sollen drei reagenzspezifische Tauchbäder für die Syntheseoperationen zur Verfügung stehen. Die Tauchbäder für Entschützungs- und Waschschritte werden von allen Trägern 2 genutzt. Nach jedem Syntheseschritt werden die Festphasenträger 1 protokollgemäß auf den drei Trägern neu organisiert.
in einem ersten Reaktionsgefäß a erfolgt die Umsetzung aller auf dem ersten Träger 2 fixierten Festphasenträger 1 mit Fmoc-Ala-OPfp; in einem zweiten Reaktionsgefäß b erfolgt die Umsetzung aller auf dem zweiten Träger 2 fixierten Festphasenträger 1 mit Fmoc-Asn-OPfp und in einem dritten Reaktionsgefäß c erfolgt die Umsetzung aller auf dem dritten Träger 2 fixierten Festphasenträger 1 mit Fmoc-Gly-OPfp.

| | **erster Träger** | **zweiter Träger** | **dritter Träger** |
|---|---|---|---|
| 1.Syntheseschritt | in Reaktionsgefäß a: | in Reaktionsgefäß b: | in Reaktionsgefäß c: |
| | Ala | Asn | Gly |
| | Ala | Asn | Gly |
| | Ala | Asn | Gly |
| | Ala | Asn | Gly |
| | Ala | Asn | Gly |
| | Ala | Asn | Gly |
| | Ala | Asn | Gly |
| | Ala | Asn | Gly |
| | Ala | Asn | Gly |

Anschließend werden jeweils drei der Festphasenträger 1 den jeweiligen drei Trägern 2 entnommen und auf die drei Träger derart neu verteilt, daß auf jedem Träger 2 jeweils drei Festphasenträger 1 fixiert sind, die aus einem anderen Reaktionsgefäß stammen. Die wiederum mit jeweils neun Festphasenträgern 1 bestückten Träger 2 werden jeweils wieder in eins der Reaktionsbäder a, b, c verbracht, wie nachstehende Tabelle verdeutlicht.

| Sortieren | erster Träger | zweiter Träger | dritter Träger |
|---|---|---|---|
| 2.Syntheseschritt | in Reaktionsgefäß a: | in Reaktionsgefäß b: | in Reaktionsgefäß c: |
| | **Ala**-Ala | **Ala**-Asn | **Ala**-Asn |
| | **Ala**-Ala | **Ala**-Asn | **Ala**-Asn |
| | **Ala**-Ala | **Ala**-Asn | **Ala**-Asn |
| | **Asn**-Ala | **Asn**-Asn | **Asn**-Asn |
| | **Asn**-Ala | **Asn**-Asn | **Asn**-Asn |
| | **Asn**-Ala. | **Asn**-Asn | **Asn**-Asn |
| | **Gly**-Ala | **Gly**-Asn | **Gly**-Asn |
| | **Gly**-Ala | **Gly**-Asn | **Gly**-Asn |
| | **Gly**-Al**a** | **Gly**-Asn | **Gly**-Asn |

Analog zum zweiten Syntheseschritt erfolgt nun wiederum die Entnahme der einzelnen Festphasenträger 1 von den jeweiligen Trägern und eine addressierte Umverteilung auf die jeweiligen Träger 2, woran sich ein dritter Syntheseschritt anschließt, wie nachfolgend dargestellt.

| Sortieren | erster Träger | zweiter Träger | dritter Träger |
|---|---|---|---|
| 3. Syntheseschritt | in Reaktionsgefäß a: | in Reaktionsgefäß b: | in Reaktionsgefäß c: |
| | **Ala-Ala**-Ala | **Ala-Ala**-Gln | **Ala-Ala**-Gly |
| | **Asn-Ala**-Ala | **Asn-Ala**-Gln | **Asn-Ala**-Gly |
| | **Gly-Ala**-Ala | **Gly-Ala**-Gln | **Gly-Ala-**Gly |
| | **Ala-Asn**-Ala | **Ala-Asn**-Gln | **Ala-Asn**-Gly |
| | **Asn-Asn**-Ala | **Asn-Asn**-Gln | **Asn-Asn**-Gly |
| | **Gly-Asn**-Ala | **Gly-Asn**-Gln | **Gly-Asn**-Gly |
| | **Ala-Asn**-Ala | **Ala-Asn**-Gln | **Ala-Asn**-Gly |
| | **Asn-Asn**-Ala | **Asn-Asn**-Gln | **Asn-Asn**-Gly |
| | **Gly-Asn**-Ala | **Gly-Asn**-Gln | **Gly-Asn**-Gly |

Wie aus vorstehender Tabelle ersichtlich ist, sind für das dargestellte einfache Beispiel sämtliche mögliche Syntheseergebnisse erhalten. Der besondere Vorteil vorliegender Anordnung ergibt sich, wenn eine Vielzahl von Festphasenträgern 1 auf entsprechend größeren Trägern 2 zum Einsatz gelangen.

Im Gegensatz zur Synthese von chemischen oder biologischen Bibliotheken, die nach den derzeit etablierten arraybasierten Verfahren durchgeführt werden, welche vorzugsweise Mikrotiterplatten für die Synthese von Bibliotheken nutzen, wobei die chemischen Funktionsträger (beads) in Kavitäten von Titerplatten eingebracht werden, wobei im Rahmen der Syntheseoperationen die Reagenzien in die einzelnen Kavitäten zudosiert werden müssen, wobei Probleme, insbesondere reagenzabhängige Unterschiede in den Reaktionszeiten, Inkompatibilität verschiedener Reagenzien miteinander sowie die Realisierung bestimmter Zugabemodi entstehen, bietet vorliegende Erfindung wesentliche Vorteile. Die Verwendung von erfindungsgemäßen Anordnungen, bei denen die beschriebenen Träger gemeinsam mit temporär auf diesen imobilisierbaren Festphasenträgern für die Synthese von Substanzbibliotheken eingesetzt werden, ermöglicht eine drastische Reduzierung sämtlicher liquid-handling Operationen sowie eine Erhöhung der Prozeßsicherheit chemischer Synthesen. Für jeden Syntheseschritt erfolgt eine optimale Zusammenstellung der Festphasenträger auf einem Träger. Diese Träger werden zur Durchführung der Synthese gemeinsam mit den Festphasenträgern in ein für die jeweilige Syntheseoperation optimal angepaßtes Reaktionsgefäß eingebracht. Damit entfallen Pipettieroperationen, welche, insbesondere bei Verwendung feuchtigkeits- oder luftempfindlicher Reagenzien nur aufwändig zu realisieren sind. Somit bietet die erfindungsgemäße Lösung einerseits ein enormes Potential zur Zeit- und Kosteneinsparung. Darüber hinaus ermöglicht die Anordnung die Durchführung von Syntheseschritten in speziell angepassten Reaktoren. Damit erhöht sich das Spektrum der zur Synthese von Substanzen verfügbaren chemischen Reaktionen und somit Diversität und Qualität der synthetisierten Substanzbibliotheken. Ein weiterer wesentlicher Vorteil der vorgeschlagenen Anordnung besteht darin, daß sich die mit Festphasenträgern besetzten Träger problemlos transportieren, archivieren, analysieren lassen und mit gelösten sowie gasförmigen chemischen Reagenzien zur Reaktion gebracht werden können, wobei im Reaktionsraum beliebige Temperaturen und Drücke einstellbar sind.

### Bezugszeichenliste

- 1 -: Festphasenträger
- 11 -: magnetisches oder magnetisierbares Element
- 12 -: funktionale Schicht
- 2 -: Träger
- 21 -: magnetisches Element des Trägers 2
- 22 -: mechanische Hilfselemente
- S -: Schnittebene

## Patentansprüche

1. Anordnung zur Herstellung, Testung und Archivierung von festphasengebundenen chemischen oder biologischen Bibliotheken, bestehend aus einem Träger (2), der durch eine großflächige Trägerplatte mit planer oder gewölbter Oberfläche gebildet ist, wobei der Träger (2) mit einer Vielzahl voneinander beabstandeter Bereiche erhöhter magnetischer Feldstärke versehen ist, die eine lösbare Erfassung und Halterung jeweils eines Festphasenträgers (1), der ebenfalls ein magnetisches oder magnetisierbares Element (11) beinhaltet, welches einem Bereich erhöhter magnetischer Feldstärke, wie einem magnetischen Element (21) des Trägers (2) zugewandt ist, ermöglicht, die Krümmung der der Trägeroberfläche zugewandten Oberfläche des Festphasenträgers (1) zur Krümmung der Trägeroberfläche bündig angepaßt ist und die Festphasenträger (1) abseitig von der Oberfläche des Trägers (2) mit einer funktionalen Schicht (12) zur Anlagerung chemischer oder biologischer Substanzen versehen sind.

2. Anordnung nach Anspruch 1, **dadurch gekennzeichnet, daß** die mit ferromagnetischen Elementen (11) versehenen Festphasenträger (1) derart ausgebildet sind, daß der Massenschwerpunkt der ferromagnetischen Elemente (11) in der Nähe der Auflagefläche erhöhter magnetischer Feldstärke des Trägers (2) liegt.

3. Anordnung nach Anspruch 1, **dadurch gekennzeichnet, daß** die Bereiche erhöhter magnetischer Feldstärke des Trägers (2) vollständig mit einer Korrosionsschutzschicht oder einer gesonderten Abdeckung versehen sind.

4. Anordnung nach Anspruch 1, **dadurch gekennzeichnet, daß** der Träger (2) zwischen den Bereichen erhöhter magnetischer Feldstärke mit mechanischen Hilfselementen (22) in Form flacher konischer oder pyramidenförmiger Erhebungen zwecks Justierungserleichterung der Festphasenträger (1) versehen ist.

5. Anordnung nach Anspruch 1 oder 2, **dadurch gekennzeichnet, daß** die Festphasenträger (1) aus wenigstens einer Halbschale zur Aufnahme eines magnetischen oder magnetisierbaren Elements (11) und einer die Halbschale vollständig überdeckenden und dichtend abschließenden Abdeckung, welche an ihrer dem Element (11) abseitigen Oberfläche eine funktionale Schicht (12) tragen, gebildet sind.

6. Anordnung nach einem der vorstehenden Ansprüche, **dadurch gekennzeichnet, daß** der Träger (2) und der Festphasenträger (1) im wesentlichen aus Silizium, Glas, Keramik oder einem chemisch stabilen Kunststoff gefertigt sind.

7. Verwendung einer Anordnung nach vorstehenden Ansprüchen, **dadurch gekennzeichnet, daß** zur Bildung von vollständigen kombinatorischen Substanzbibliotheken Anteile der Festphasenträger (1) gemäß eines vorgebbaren Protokolls nach einem erfolgten Syntheseschritt von ersten Trägern (2) entnommen und gemäß eines durchzuführenden weiteren Syntheseschritts teilweise auf andere Träger umgeordnet werden, die im übrigen Festphasenträger (1) aus einem anderen vorangegangenen Syntheseschritts tragen, wobei dieser Vorgang nebst an sich üblicher Zwischenwaschschritte sooft wiederholt wird, bis die gewünschten Substanzbibliotheken erhalten sind.

## Claims

1. Arrangement for production, testing and archiving chemical or biological arrays bonded to a solid phase, consists of a base support (2) formed by a large-surface support plate with a planar or curved surface and said base support (2) is provided with a number of discrete regions with an elevated magnetic field strength, each of which allows a removable attachment and retention of a solid phase support (1), each comprising a magnetic or magnetizable element (11) associated with a region of elevated magnetic field strength such as a magnetic element (21) on the base support (2), whereby the curvature of the surface of the solid phase support (1) facing the base support surface, matches the curvature of the base support surface to give a flush fit and the solid phase supports (1) facing away from the base support (2) surface are provided with a functional layer (12) for the permanent bonding of chemical or biological substances.

2. Arrangement according to claim 1, wherein the solid phase supports (1) provided with ferromagnetic elements (11) are formed in such a way that the mass center of the ferromagnetic elements (11) is located near the contact surface of elevated magnetic field strength of the base support (2).

3. Arrangement according to claim 1, wherein the regions of elevated magnetic field strength of the base support (2) are completely provided with a corrosion-resistant protective layer or with an extra cover.

4. Arrangement according to claim 1, wherein the base support (2) is provided with mechanical auxiliary units (22) realized as flat conic or pyramid-like elevated elements between the regions of increased magnetic field strength for easing the adjustment of the solid phase supports (1).

5. Arrangement according to claim 1 or 2, wherein the solid phase supports (1) are formed from at least one half-shell for taking up a magnetic or magnetizable element (11) and from a cover which covers the half-shell completely and tightly and which is provided with a functional layer (12) on the surface facing away from the element (11).

6. Arrangement according to anyone of the preceding claims, wherein the base support (2) and the solid phase support (1) are mainly made of silicon, glass, ceramics or a chemically stable plastic material.

7. Use of an arrangement according to the preceding claims, wherein for the production of completely combined substance arrays portions of the solid phase supports (1) are removed from first base supports (2) according to a predefined protocol after a completed synthesis step and which, in a further synthesis step, are then partly resorted on other base supports containing solid phase supports (1) from another preceding synthesis step, whereby this procedure as well as the normal intermediate washing steps are repeated as often as the desired substance arrays are obtained.

## Revendications

1. Configuration d'un dispositif pour produire, tester et archiver des matrices chimiques ou biologiques liées à une phase solide comprenant un support (2) formé par une plaquette-support de grande superficie, plane ou bombée, le support (2) étant doté d'une multitude de zones ne se jouxtant pas les unes des autres et **caractérisées par** des champs magnétiques de puissance élevée permettant la saisie et l'attachement amovible des supports de phases solides (1) comprenant également un élément magnétique ou magnétisable (11), orienté vers une zone de puissance élevée du champ magnétique (21) du support (2), le bombement de la surface du support de phases solides (1) faisant face à la surface du support, s'adaptant ainsi au plus près au bombement de cette surface et que les supports de phases solides (1) sont dotés côté opposé à la surface du support (2), d'une couche fonctionnelle (12) afin de permettre l'application de substances chimiques ou biologiques.

2. Configuration suivant la revendication 1 est **caractérisée en ce que** les supports de phases solides (1) dotés d'éléments ferromagnétiques (11) sont conçus de sorte que le centre de masse des éléments ferromagnétiques (11) soit situé à proximité de la surface du support (2) où la puissance du champ magnétique appliqué est plus élevée.

3. Configuration suivant la revendication 1 est **caractérisée en ce que** les zones **caractérisées par** une puissance élevée du champ magnétique du support (2) sont complètement recouvertes d'une couche anticorrosive ou d'un revêtement spécial.

4. Configuration suivant la revendication 1 est **caractérisée en ce que** le support (2) entre les zones de puissance élevé du champ magnétique est pourvu d'éléments auxiliaires mécaniques (22) en forme de bosses planes coniques ou pyramidales, destinés à rendre plus aisé l'ajustage des supports de phases solides (1).

5. Configuration suivant la revendication 1 ou 2 est **caractérisée en ce que** le support de phases solides (1) est composé d'au moins une demi-coquille destinée à recevoir un élément magnétique ou magnétisable (11) et d'une pièce recouvrant complètement et de manière étanche la demi-coquille et portant une couche fonctionnelle (12) sur la surface opposée à celle qui fait face à la pièce.

6. Configuration suivant les revendications précédentes est **caractérisée en ce que** le support (2) et les support de phases solides (1) sont essentiellement constitués de silicium, de verre, de céramique ou d'une matière plastique chimiquement stable.

7. L'application d'une configuration suivant les revendications précédentes est **caractérisée en ce que**, en vue de la création complètes de matrices combinatoires de substances, après un première opération de synthèse, des portions de supports de phases solides (1) sont prélevées des premiers supports(2) suivant un protocole prélablement défini, et, au cours d'une opération de synthèse à exécuter ensuite, ces portions sont transférerées sur d'autres supports portant des supports de phases solides (1) provenant quant à eux d'une opération de synthèse antérieure, ce processus comprenant par ailleurs des opérations intermédiaires de lavage courantes, répétées jusqu'à ce que les matrices de substances souhaitées soient obtenues.
